# EUROPÄISCHE PATENTSCHRIFT

(11) **EP 2 654 190 B1**
(45) Veröffentlichungstag und Bekanntmachung des Hinweises auf die Patenterteilung: **16.11.2022**
(21) Anmeldenummer: 13163363.8
(22) Anmeldetag: 11.04.2013
(51) Int. Cl.: H02M 7/487, H02P 27/08, H02M 7/797

(54) **Verfahren zum Betreiben einer elektrischen Schaltung**
Method for operating an electric circuit
Procédé de fonctionnement d'une commutation électrique

(30) Priorität: 18.04.2012 DE 102012206409
(43) Veröffentlichungstag der Anmeldung: 23.10.2013
(73) Patentinhaber: GE Energy Power Conversion GmbH, 12277 Berlin (DE)
(72) Erfinder: Jakob, Roland, 12524 Berlin (DE); Sadowski, Piotr, 12247 Berlin (DE)
(74) Vertreter: Serjeants LLP

(56) Entgegenhaltungen:
- DE-A1-102004 034 948
- DE-C1- 19 648 948
- US-A1- 2010 315 776

## Beschreibung

Die Erfindung betrifft ein Verfahren zum Betreiben einer elektrischen Schaltung.

Beispielsweise aus der US 5,465,202 ist eine elektrische Schaltung bekannt, bei der ein Stromrichter und ein Zwischenkreis-Kondensator parallelgeschaltet sind. Im Betrieb der Schaltung wird der Kondensator mit einer Gleichspannung beaufschlagt, die von dem Stromrichter in eine dreiphasige Wechselspannung umgesetzt wird. Dem Kondensator ist eine Serienschaltung aus einem Entlade-Widerstand und einem Entlade-Schalter parallelgeschaltet. Wenn der Kondensator entladen werden soll, also beispielsweise bei einer Unterbrechung des Betriebs der elektrischen Schaltung, wird der Entlade-Schalter leitend geschaltet und der Zwischenkreis-Kondensator entlädt sich über den Entlade-Widerstand.

Ersichtlich sind für die Entladung des Zwischenkreis-Kondensators der Entlade-Widerstand und der Entlade-Schalter erforderlich.

Beispielsweise aus der DE 198 29 856 A1 sind sogenannte NPC-Dreipunkt-Stromrichter (NPC = neutral point clamped) bekannt.

DE 196 48 948 C1 offenbart eine elektrische Schaltung gemäß der Präambel von Anspruch 1. Aufgabe der Erfindung ist es, eine elektrische Schaltung so zu betreiben, dass für eine Entladung eines Zwischenkreis-Kondensators ein geringerer Aufwand erforderlich ist.

Die Erfindung löst diese Aufgabe durch ein Verfahren zum Betreiben einer elektrischen Schaltung nach dem Anspruch 1.

Das zumindest eine leitend geschaltete Leistungshalbleiterbauelement bildet somit einen Entladekreis mit dem Widerstand bzw. mit den Widerständen. Unabhängig von der Anzahl der Widerstände ist es dabei nicht erforderlich, einen zusätzlichen Entlade-Schalter zum Leitend-Schalten des Entladekreises in die erfindungsgemäße elektrische Schaltung aufzunehmen.

Im Vergleich zum Stand der Technik US 5,465,202 besteht der Vorteil der Erfindung somit darin, dass kein separater Entlade-Schalter zum Entladen des Zwischenkreis-Kondensators erforderlich ist, sondern dass stattdessen zumindest eines der vorhandenen Leistungshalbleiterbauelemente des Stromrichters dazu verwendet wird, den Entladestrom aus dem Zwischenkreis-Kondensator zu führen. Der beim Stand der Technik vorhandene Entlade-Schalter kann somit eingespart und der Aufwand insgesamt vermindert werden.

Ein weiterer Vorteil der Erfindung kann darin bestehen, dass auch der beim Stand der Technik vorhandene separate Entlade-Widerstand eingespart wird. Dies ist dann der Fall, wenn ein in dem Stromrichter bereits vorhandener Widerstand als Entlade-Widerstand verwendet wird.

Vorzugsweise ist deshalb vorgesehen, dass es sich bei dem den beiden mittleren Leistungshalbleiterbauelementen parallelgeschalteten Widerstand um einen sogenannten Symmetriewiderstand handelt. Ein derartiger Symmetriewiderstand ist dazu vorgesehen, die Spannung an den beiden mittleren Leistungshalbleiterbauelementen des Stromrichters zu begrenzen. Durch die Verwendung dieses Symmetriewiderstands als Entlade-Widerstand kann somit der beim Stand der Technik vorhandene separate Entlade-Widerstand eingespart und der Aufwand weiter vermindert werden.

Die Frage, welches bzw. welche der Leistungshalbleiterbauelemente zur Erzeugung eines Entladestroms leitend geschaltet wird bzw. werden, hängt von der Ausgestaltung des Stromrichters ab.

So werden bei einer vorteilhaften Weiterbildung der Erfindung die äußeren beiden Leistungshalbleiterbauelemente leitend geschaltet und auf diese Weise wird ein Entladestrom aus dem Kondensator über die beiden äußeren Leistungshalbleiterbauelemente und den Widerstand erzeugt.

Bei einer anderen vorteilhaften Weiterbildung der Erfindung, bei der zwei in Reihe geschaltete Kondensatoren vorhanden sind und den mittleren beiden Leistungshalbleiterbauelementen zwei Dioden gegensinnig parallelgeschaltet sind, deren Verbindungspunkt mit dem Verbindungspunkt der beiden Kondensatoren verbunden ist, wird eines der beiden äußeren Leistungshalbleiterbauelemente leitend geschaltet und auf diese Weise wird ein Entladestrom aus einem der beiden Kondensatoren über das leitend geschaltete Leistungshalbleiterbauelement, den Widerstand und eine der beiden Dioden erzeugt.

Weitere Merkmale, Anwendungsmöglichkeiten und Vorteile der Erfindung ergeben sich aus der nachfolgenden Beschreibung von Ausführungsbeispielen der Erfindung, die in den zugehörigen Figuren dargestellt sind.

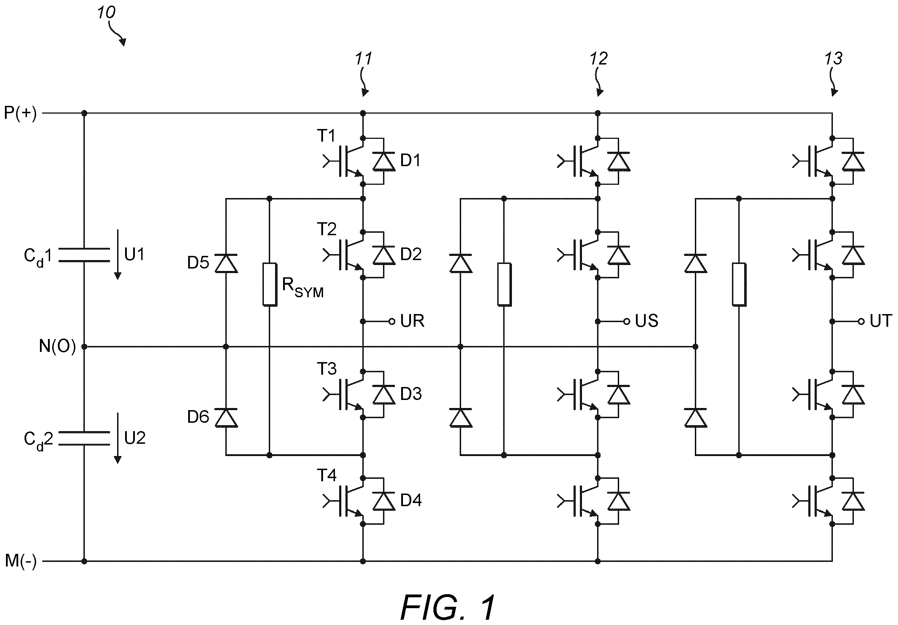

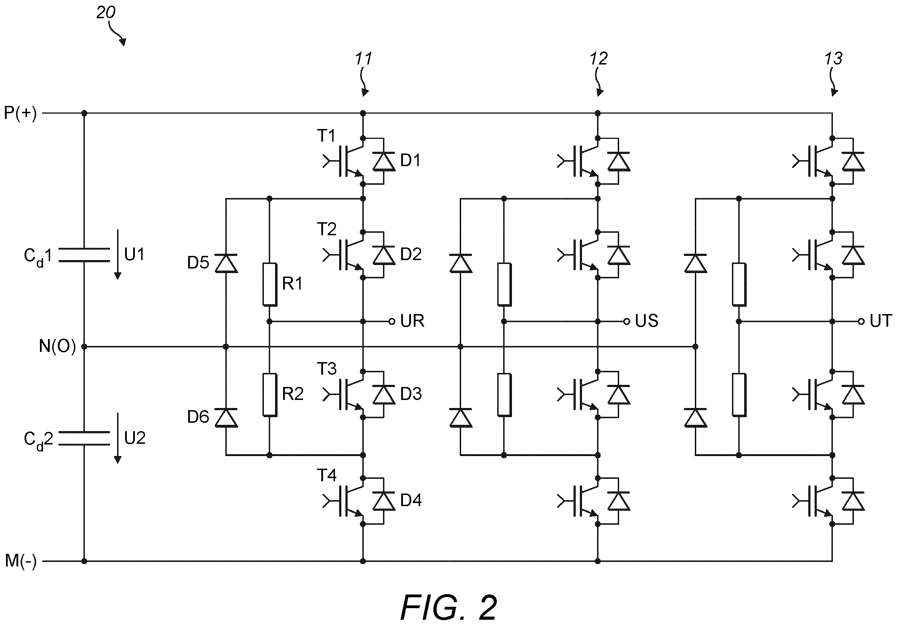

Die Figur 1 zeigt ein schematisches Schaltbild eines ersten Ausführungsbeispiels einer erfindungsgemäßen elektrischen Schaltung und die Figur 2 zeigt ein schematisches Schaltbild eines zweiten Ausführungsbeispiels einer erfindungsgemäßen elektrischen Schaltung.

In der Figur 1 ist ein Stromrichter 10 dargestellt, der zur Umwandlung einer Gleichspannung in eine Wechselspannung oder umgekehrt vorgesehen ist. Im vorliegenden Ausführungsbeispiel ist der Stromrichter 10 dreiphasig ausgebildet, der Stromrichter 10 könnte aber auch eine andere Phasenanzahl aufweisen. Bei dem Stromrichter 10 handelt es sich beispielhaft um einen dreistufigen Stromrichter, und zwar insbesondere um einen sogenannten 3-Level-NPC-Stromrichter (NPC = neutral point clamped). Es versteht sich aber, dass bei dem Stromrichter 10 auch eine andere Stufenanzahl vorgesehen sein könnte. Ebenfalls könnte der Stromrichter 10 einen andersartigen Schaltungsaufbau besitzen.

Der Stromrichter 10 weist eine erste Serienschaltung 11 auf, die aus vier IGBTs T1, T2, T3, T4 (IGBT = insulated gate bipolar transistor) mit jeweils gegensinnig parallelgeschalteten Freilaufdioden D1, D2, D3, D4 besteht. Zu den beiden mittleren IGBTs T2, T3 sind zwei in Serie geschaltete Dioden D5, D6 gegensinnig parallelgeschaltet. Weiterhin ist ein Widerstand zu den beiden mittleren IGBTs T2, T3 parallelgeschaltet. Bei diesem Widerstand kann es sich insbesondere um einen sogenannten Symmetriewiderstand Rsym handeln.

Es wird darauf hingewiesen, dass der Stromrichter 10 anstelle der IGBTs auch andere Leistungshalbleiterbauelemente aufweisen könnte, beispielsweise Thyristoren, insbesondere GTO-Thyristoren (GTO = gate turn off) oder dergleichen.

Die Serienschaltung 11 ist an einen Anschluss P(+) für ein positives Potential und an einen Anschluss M(-) für ein negatives Potential angeschlossen. Der Verbindungspunkt der beiden Dioden D5, D6 ist an einen Anschluss N(0) für ein Nullpotential angeschlossen. Der Verbindungspunkt der beiden mittleren IGBTs T2, T3 bildet einen Anschluss UR für eine Wechselspannung.

Der Stromrichter 10 weist eine zweite Serienschaltung 12 und eine dritte Serienschaltung 13 auf, die in gleicher Weise wie die erste Serienschaltung 11 aufgebaut sind. Die drei Serienschaltungen 11, 12, 13 sind zueinander parallelgeschaltet. Bei der zweiten Serienschaltung 12 bildet der Verbindungspunkt der beiden dortigen mittleren IGBTs einen Anschluss US für eine Wechselspannung und bei der dritten Serienschaltung 13 bildet der Verbindungspunkt der beiden dortigen mittleren IGBTs einen Anschluss UT für eine Wechselspannung.

Zwischen dem Anschluss P(+) für ein positives Potential und dem Anschluss N(0) für ein Nullpotential ist ein erster Kondensator Cd1 und zwischen dem Anschluss N(0) für ein Nullpotential und dem Anschluss M(-) für ein negatives Potential ist ein zweiter Kondensator Cd2 angeordnet. Die beiden Kondensatoren Cd1, Cd2 bilden einen sogenannten Zwischenkreis.

Es wird darauf hingewiesen, dass - zumindest hinsichtlich der nachfolgend erläuterten Verfahren zum Entladen der beiden Kondensatoren Cd1, Cd2 - gegebenenfalls auch nur ein einziger Kondensator zwischen den beiden äußeren Anschlüssen P(+), M(-) vorhanden sein kann, der dann den Zwischenkreis bildet.

Wird der Stromrichter 10 beispielhaft als Wechselrichter betrieben, so liegt an dem ersten Kondensator Cd1 eine erste Gleichspannung U1 und an dem zweiten Kondensator Cd2 eine zweite Gleichspannung U2 an. In nicht-dargestellter Weise ist dabei eine Spannungsquelle vorhanden, die den Kondensatoren Cd1, Cd2 Energie zuführt und damit die beiden Gleichspannungen U1, U2 im Wesentlichen erzeugt bzw. aufrechterhält. Bei der Spannungsquelle kann es sich beispielsweise um ein Energieversorgungsnetz handeln, das über einen Gleichrichter mit den beiden Kondensatoren Cd1, Cd2 gekoppelt ist.

Wird der Stromrichter 10, wie vorstehend angenommen, als Wechselrichter betrieben, so werden die IGBTs der drei Serienschaltungen 11, 12, 13 derart von einem Steuergerät angesteuert, dass an den drei Anschlüssen UR, US, UT eine dreiphasige Wechselspannung Urst abgreifbar ist. Hierzu werden die IGBTs der drei Serienschaltungen 11, 12, 13 fortlaufend von dem Steuergerät sperrend und leitend geschaltet. Die an den beiden Kondensatoren Cd1, Cd2 anliegenden Gleichspannungen U1, U2 werden auf diese Weise von dem Stromrichter 10 in die Wechselspannung Urst umgesetzt. Diese Wechselspannung Urst kann dann beispielsweise eine Last beaufschlagen, beispielsweise einen Antriebsmotor oder dergleichen.

Wie erläutert wurde, ist in jeder der drei Serienschaltungen 11, 12, 13 des Stromrichters 10 jeweils ein Widerstand vorhanden. Im vorliegenden Ausführungsbeispiel handelt es sich bei diesem Widerstand um einen sogenannten Symmetriewiderstand Rsym. Dieser Symmetriewiderstand Rsym ist dazu vorgesehen, die Spannung an den beiden mittleren IGBTs T2, T3 zu begrenzen.

Wenn beispielsweise die beiden IGBTs T1, T2 sperren und die beiden IGBTs T3, T4 leitend geschaltet sind, dann liegt die Summe der beiden Gleichspannungen U1, U2, die sogenannte Zwischenkreisspannung, an den beiden IGBTs T1, T2 an. Wenn weiterhin beispielsweise aufgrund von Bauteiltoleranzen oder dergleichen die an dem IGBT T2 abfallende Spannung wesentlich größer ist als die an dem IGBT T1 abfallende Spannung, dann ist es - ohne den Symmetriewiderstand Rsym - möglich, dass an dem IGBT T2 eine Spannung anliegt, die einen vorgegebenen Wert, beispielsweise die halbe Zwischenkreisspannung übersteigt.

Ist der Symmetriewiderstand Rsym jedoch vorhanden, so kann die an dem IGBT T2 anliegende Spannung auf die beispielhaft genannte halbe Zwischenkreisspannung begrenzt werden. Dies ergibt sich daraus, dass im vorliegend beschriebenen Fall, also wenn die beiden IGBTs T1, T2 sperren und die beiden IGBTs T3, T4 leitend geschaltet sind, der Symmetriewiderstand Rsym und der IGBT T2 eine Parallelschaltung bilden, und dass durch eine entsprechende Auswahl des Widerstandswerts des Symmetriewiderstands Rsym die an dieser Parallelschaltung anliegende Spannung auf einen erwünschten Wert, beispielsweise auf die halbe Zwischenkreisspannung begrenzt werden kann.

Es wird ausdrücklich darauf hingewiesen, dass es sich bei dem den beiden mittleren IGBTs T3, T4 parallelgeschalteten Widerstand nicht zwingend um den vorstehend erläuterten Symmetriewiderstand Rsym handeln muss. Es ist auch möglich, dass der Widerstand zu einem anderen Zweck vorhanden ist oder nur zu dem nachfolgend erläuterten Zweck vorgesehen ist, also nur zum Entladen der beiden Kondensatoren Cd1, Cd2 gemäß den nachfolgend beschriebenen Verfahren.

Wird der Betrieb des Stromrichters 10 unterbrochen oder beendet, so wird den beiden Kondensatoren Cd1, Cd2 keine Energie mehr zugeführt. Die beiden Kondensatoren Cd1, Cd2 werden nunmehr nach zumindest einem der folgenden Verfahren entladen.

Es werden die beiden IGBTs T1, T4 leitend geschaltet und die beiden IGBTs T2, T3 werden gesperrt. Der Symmetriewiderstand Rsym ist dann den beiden Kondensatoren Cd1, Cd2 parallel geschaltet. Damit kann ein Entladestrom über die beiden IGBTs T1, T4 und den Symmetriewiderstand Rsym fließen.

Es wird zumindest der IGBT T1 leitend geschaltet und die beiden IGBTs T3, T4 werden gesperrt. Der Symmetriewiderstand Rsym ist dann über die Diode D6 dem ersten Kondensator Cd1 parallel geschaltet. Damit kann ein Entladestrom aus dem ersten Kondensator Cd1 über den IGBT T1, den Symmetriewiderstand Rsym und die Diode D6 fließen.

Es wird zumindest der IGBT T4 leitend geschaltet und die beiden IGBTs T1, T2 werden gesperrt. Der Symmetriewiderstand Rsym ist dann über die Diode D5 dem zweiten Kondensator Cd2 parallel geschaltet. Damit kann ein Entladestrom aus dem zweiten Kondensator Cd2 über die Diode D5, den Symmetriewiderstand Rsym und den IGBT T4 fließen.

Es versteht sich, dass das Entladen der Kondensatoren Cd1, Cd2 dabei einzeln über jede der drei Serienschaltungen 11, 12, 13 des Stromrichters 10 erfolgen kann. Selbstverständlich kann das Entladen auch gemeinsam über zwei oder alle drei Serienschaltungen gleichzeitig erfolgen.

Weiterhin versteht es sich, dass bei den beiden zuletzt beschriebenen Verfahren zuerst eine vorgegebene Zeitdauer der erste Kondensator Cd1 entladen wird und dann eine vorgegebene Zeitdauer der zweite Kondensator Cd2 entladen wird. Selbstverständlich kann auch zuerst der erste Kondensator Cd1 vollständig und danach der zweite Kondensator Cd2 ebenfalls vollständig entladen werden.

Sind die beiden Kondensatoren Cd1, Cd2 über einen zweiten Stromrichter an ein Energieversorgungsnetz angeschlossen und beaufschlagt die Wechselspannung Urst des Stromrichters 10 eine Last, und ist dabei der zweite Stromrichter im Wesentlichen baugleich ausgebildet wie der erläuterte Stromrichter 10, so kann bei den beiden zuletzt beschriebenen Möglichkeiten einer der beiden Kondensatoren Cd1, Cd2 beispielsweise über den lastseitigen Stromrichter 10 entladen werden, während der andere der beiden Kondensatoren Cd2, Cd1 über den netzseitigen zweiten Stromrichter entladen werden kann.

Es versteht sich, dass die erläuterten Verfahren zum Entladen der Kondensatoren des Zwischenkreises in entsprechender Weise auch bei Stromrichtern durchführbar sind, die mehr als drei Stufen aufweisen.

Handelt es sich in einem Beispiel außerhalb der Erfindung um einen fünfstufigen Stromrichter mit beispielsweise acht in Serie geschalteten IGBTs pro Phase, so ist es beispielsweise möglich, den vier mittleren IGBTs einen Entlade-Widerstand parallel zu schalten. In diesem Fall können dann beispielsweise die vier äußeren IGBTs leitend geschaltet werden und auf diese Weise kann ein Entladestrom aus dem bzw. den Kondensatoren über die vier leitenden IGBTs und den Entlade-Widerstand erzeugt werden. Gegebenenfalls kann es sich dabei bei dem Entlade-Widerstand um einen im Stromrichter bereits vorhandenen Symmetriewiderstand oder um einen aus sonstigen Gründen im Stromrichter bereits vorhandenen Widerstand handeln.

In der Figur 2 ist ein Stromrichter 20 dargestellt, der zur Umwandlung einer Gleichspannung in eine Wechselspannung oder umgekehrt vorgesehen ist. Der Stromrichter 20 der Figur 2 entspricht weitestgehend dem Stromrichter 10 der Figur 1. Übereinstimmende Bauelemente sind deshalb in den Figuren 1 und 2 mit übereinstimmenden Bezugszeichen versehen. Im Hinblick auf den Aufbau und die Funktionsweise des Stromrichters 20 der Figur 2 wird insoweit auf die Erläuterungen zu dem Stromrichter 10 der Figur 1 verwiesen.

Der einzige Unterschied zwischen den beiden Stromrichtern besteht darin, dass in allen drei Phasen der jeweilige Symmetriewiderstand Rsym des Stromrichters 10 der Figur 1 bei dem Stromrichter 20 der Figur 2 durch eine Serienschaltung zweier Widerstände R1, R2 ersetzt ist, wobei in jeder Phase der Verbindungspunkt dieser beiden Widerstände R1, R2 jeweils mit dem Verbindungspunkt der beiden zugehörigen IGBTs T3, T4 verbunden ist.

Bei den beiden Widerständen R1, R2 jeder Phase kann es sich um Symmetriewiderstände handeln, muss es aber nicht.

In entsprechender Weise, wie dies anhand der Figur 1 bereits erläutert worden ist, kann auch bei dem Stromrichter 20 der Figur 2 mit Hilfe von mindestens einem der IGBTs ein Entladekreis über mindestens einen der Widerstände R1, R2 aufgebaut und damit die Kondensatoren Cd1, Cd2 entladen werden. Aufgrund des Vorhandenseins zweier Widerstände R1, R2 sind dabei bei der Figur 2 gegebenenfalls mehr Entladekreise möglich bzw. denkbar als bei der Figur 1.

## Patentansprüche

1. Verfahren zum Betreiben einer elektrischen Schaltung, wobei die elektrische Schaltung mit einem Stromrichter (10) versehen ist, der mindestens eine Serienschaltung (11, 12, 13) aufweist, welche an einen Anschluss P(+) für ein positives Potential und an einen Anschluss M(-) für ein negatives Potential angeschlossen ist und jede Serienschaltung (11, 12, 13) aus vier Leistungshalbleiterschaltern besteht, wobei der Verbindungspunkt der beiden mittleren Leistungshalbleiterschalter einen Anschluss für eine Wechselspannung bildet, und wobei die elektrische Schaltung mit mindestens zwei in Reihe geschalteten Kondensatoren (Cdl, Cd2) versehen ist, die mit der Serienschaltung (11, 12, 13) parallel geschaltet und wobei die in Reihe geschalteten Kondensatoren an einem Ende mit dem Anschluss P(+) und an dem anderen Ende mit dem Anschluss M(-) verbunden sind und der Verbindungspunkt der Kondensatoren (Cdl, Cd2) einen dritte Anschluss für ein Nullpotential bildet, wobei zwei in Reihe geschaltete Dioden (D5, D6) den mittleren beiden Leistungshalbleiterschaltern gegensinnig parallelgeschaltet sind, deren Verbindungspunkt mit dem Verbindungspunkt der beiden Kondensatoren (Cdl, Cd2) verbunden ist, wobei mindestens ein Widerstand den mittleren beiden Leistungshalbleiterschaltern parallel geschaltet ist, **gekennzeichnet dadurch, dass** bei dem Verfahren zumindest einer der zwei äußeren Leistungshalbleiterschalter leitend geschaltet und auf diese Weise ein Entladestrom aus dem mindestens einen Kondensator (Cdl, Cd2) über den mindestens einen leitend geschalteten Leistungshalbleiterschalter und den Widerstand erzeugt wird.

2. Verfahren nach Anspruch 1, wobei die äußeren beiden Leistungshalbleiterschalter leitend geschaltet werden und auf diese Weise ein Entladestrom aus den zwei Kondensatoren (Cdl, Cd2) über die beiden äußeren Leistungshalbleiterschalter und den Widerstand erzeugt wird.

3. Verfahren nach Anspruch 1, wobei genau einer der beiden äußeren Leistungshalbleiterschalter leitend geschaltet wird und auf diese Weise ein Entladestrom aus einem der beiden Kondensatoren (Cdl, Cd2) über den leitend geschalteten Leistungshalbleiterschalter, den Widerstand und eine der beiden Dioden (D5, D6) erzeugt wird.

4. Verfahren nach Anspruch 1, wobei es sich bei dem Widerstand um einen sogenannten Symmetriewiderstand (Rsym) handelt.

5. Verfahren nach Anspruch 1, wobei drei zueinander parallelgeschaltete und aus Leistungshalbleiterschaltern bestehende Serienschaltungen (11, 12, 13) vorhanden sind.

6. Verfahren nach Anspruch 1, wobei es sich bei den Leistungshalbleiterschalter um IGBTs (T1, T2, T3, T4) handelt (IGBT = insulated gate bipolar transistor), denen vorzugsweise jeweils eine Freilaufdiode (D1, D2, D3, D4) gegensinnig parallelgeschaltet ist.

## Claims

1. Method for operating an electric circuit, wherein the electric circuit is provided with a power converter (10) having at least one series circuit (11, 12, 13) that is connected to a terminal P(+) for a positive potential and to a terminal M(-) for a negative potential, and each series circuit (11, 12, 13) consists of four power semiconductor elements, wherein the connection point of the two middle power semiconductor elements forms a terminal for an alternating voltage, and wherein the electric circuit is provided with at least two series-connected capacitors (Cdl, Cd2) which are connected in parallel with the series circuit (11, 12, 13) and wherein the series-connected capacitors are connected at one end to the terminal P(+) and at the other end to the terminal M(-) and the connection point of the capacitors (Cdl, Cd2) forms a third terminal for a zero potential, two series-connected diodes (D5, D6) being connected in parallel in opposite senses to the central two power semiconductor elements, the connection point of which is connected to the connection point of the two capacitors (Cdl, Cd2), at least one resistor being connected in parallel to the central two power semiconductor elements, **characterised in that** in the method at least one of the two outer power semiconductor elements is conductively connected and in this way a discharge current is generated from the at least one capacitor (Cdl, Cd2) via the at least one conductively connected power semiconductor element and the resistor.

2. Method according to claim 1, wherein the outer two power semiconductor elements are conductively connected and in this way a discharge current is generated from the two capacitors (Cdl, Cd2) via the two outer power semiconductor elements and the resistor.

3. Method according to claim 1, wherein exactly one of the two outer power semiconductor elements is conductively connected and in this way a discharge current is generated from one of the two capacitors (Cdl, Cd2) via the conductively connected power semiconductor element, the resistor and one of the two diodes (D5, D6).

4. Method according to claim 1, wherein the resistor is a so-called balancing resistor (Rsym).

5. Method according to claim 1, wherein there are three series circuits (11, 12, 13) connected in parallel to each other and consisting of power semiconductor elements.

6. Method according to claim 1, wherein the power semiconductor elements are IGBTs (T1, T2, T3, T4) (IGBT = insulated gate bipolar transistor), to each of which a flyback diode (D1, D2, D3, D4) is preferably connected in parallel in the opposite sense.

## Revendications

1. Procédé pour faire fonctionner un circuit électrique, dans lequel le circuit électrique est muni d'un convertisseur de courant (10), qui présente au moins un circuit série (11, 12, 13) qui est relié à une borne P(+) pour un potentiel positif et à une borne M (-) pour un potentiel négatif, et chaque circuit série (11, 12, 13) est composé de quatre commutateurs à semi-conducteurs de puissance, dans lequel le point de liaison des deux commutateurs à semi-conducteurs de puissance centraux forme une borne pour une tension alternative, et dans lequel le circuit électrique est muni d'au moins deux condensateurs connectés en série (Cdl, Cd2), qui sont connectés en parallèle avec le circuit série (11, 12, 13) et dans lequel les condensateurs connectés en série sont reliés via une première extrémité à la borne P(+) et via l'autre extrémité à la borne M(-) et le point de liaison des condensateurs (Cdl, Cd2) forme une troisième borne pour un potentiel nul, dans lequel deux diodes connectées en série (D5, D6) sont connectées en parallèle dans des directions opposées aux deux commutateurs à semi-conducteurs de puissance centraux, dont le point de liaison est relié au point de liaison des deux condensateurs (Cdl, Cd2), dans lequel au moins une résistance est connectée en parallèle aux deux commutateurs à semi-conducteurs de puissance centraux, **caractérisé en ce que** dans le procédé, au moins un des deux commutateurs à semi-conducteurs de puissance externes est mis à l'état passant et de cette manière un courant de décharge est généré à partir du au moins un condensateur (Cdl, Cd2) via le au moins un commutateur à semi-conducteurs de puissance mis à l'état passant et la résistance.

2. Procédé selon la revendication 1, dans lequel les deux commutateurs à semi-conducteurs de puissance externes sont mis à l'état passant et de cette manière un courant de décharge est généré à partir des deux condensateurs (Cdl, Cd2) via les deux commutateurs à semi-conducteurs de puissance externes et la résistance.

3. Procédé selon la revendication 1, dans lequel précisément l'un des deux commutateurs à semi-conducteurs de puissance externes est mis à l'état passant et de cette manière un courant de décharge est généré à partir de l'un des deux condensateurs (Cdl, Cd2) via le commutateur à semi-conducteurs de puissance mis à l'état passant, la résistance et l'une des deux diodes (D5, D6).

4. Procédé selon la revendication 1, dans lequel la résistance est une résistance dite en symétrie (Rsym).

5. Procédé selon la revendication 1, dans lequel trois circuits série (11, 12, 13) connectés en parallèle les uns aux autres et constitués de commutateurs à semi-conducteurs de puissance sont prévus.

6. Procédé selon la revendication 1, dans lequel les commutateurs à semi-conducteurs de puissance sont des IGBT (T1, T2, T3, T4) (IGBT = transistor bipolaire à grille isolée), dont chacun d'entre eux est de préférence connecté en parallèle dans des directions opposées à une diode de roue libre (D1, D2, D3, D4).
